# FASCICULE DE BREVET EUROPEEN

(11) **EP 2 849 616 B1**
(45) Date de publication et mention de la délivrance du brevet: **08.06.2016**
(21) Numéro de dépôt: 13727267.0
(22) Date de dépôt: 06.05.2013
(51) Int. Cl.: A47J 27/00, C25D 11/22

(54) **PROCEDE D'OBTENTION D'UN RECIPIENT DE CUISSON COMPORTANT UNE FACE EXTERIEURE ANODISEE COLOREE ELECTROCHIMIQUEMENT**
VERFAHREN ZUR HERSTELLUNG EINES KOCHBEHÄLTERS MIT EINER ELEKTROCHEMISCH GEFÄRBTEN, ANODISIERTEN AUSSENFLÄCHE
METHOD FOR OBTAINING A COOKING CONTAINER COMPRISING AN ELECTROCHEMICALLY COLOURED ANODISED OUTER FACE

(30) Priorité: 16.05.2012 FR 1254547
(43) Date de publication de la demande: 25.03.2015
(60) Demande divisionnaire: 16162702.1
(73) Titulaire: SEB S.A., 69130 Ecully (FR)
(72) Inventeur: RUBIO, Martin, 74150 Rumilly (FR); TUFFE, Stéphane, 73160 Cognin (FR)
(74) Mandataire: Cémeli, Eric Philippe Laurent
(86) Numéro de dépôt international: PCT/FR2013/051011
(87) Numéro de publication internationale: WO 2013/171408

(56) Documents cités:
- EP-A1- 0 429 656
- EP-A1- 0 902 105
- WO-A1-2008/061555

## Description

La présente invention concerne le domaine technique des appareils et ustensiles de cuisson comportant un récipient de cuisson.

La présente invention concerne plus particulièrement, mais non exclusivement, les articles culinaires tels que les casseroles, les poêles ou les woks, ainsi que les appareils électriques de cuisson comportant une cuve destinée à contenir les aliments.

Il est connu du document GB 1 099 486 de réaliser des récipients de cuisson en aluminium présentant une couche superficielle d'anodisation dure. Cette couche superficielle peut si désiré être pigmentée. La surface ainsi obtenue est plus facile à nettoyer qu'une surface non anodisée. Toutefois la surface ainsi obtenue est moins facile à nettoyer qu'une surface revêtue d'une couche anti-adhésive.

Le document EP 0 424 072 et le document EP 0 902 105 proposent de réaliser des récipients de cuisson comportant un revêtement antiadhérent tel que du PTFE sur un support en aluminium présentant une anodisation dure. L'anodisation dure est donc réalisée préalablement au revêtement PTFE. Cette disposition permet d'améliorer la résistance à l'usure et aux rayures du revêtement PTFE. Usuellement, le revêtement PTFE est utilisé principalement pour revêtir la face intérieure des récipients de cuisson, du fait de la résistance mécanique limitée de ce type de revêtement.

Il est connu du document EP 1 894 502 de réaliser un revêtement sol-gel sur au moins une face d'un article culinaire comportant un support en aluminium ou en alliage d'aluminium, ce support pouvant être en aluminium anodisé. Ce document envisage une épaisseur de couche d'anodisation comprise entre 5 et 100µm. L'autre face peut si désiré être revêtue de PTFE. Le revêtement sol-gel permet d'améliorer la tenue au lave-vaisselle du récipient de cuisson, ainsi que la tenue à la flamme du récipient de cuisson.

Il est connu du document FR 2 967 563 de réaliser un récipient de cuisson comportant une face extérieure anodisée dure et colorée, pour lequel un revêtement sol gel est réalisé sur la face extérieure anodisée dure. Une telle réalisation permet d'obtenir des récipients de cuisson pour lesquels les colorations de la face extérieure présentent un caractère durable, sont susceptibles de résister aux agents lessiviels utilisés dans les lave-vaisselle et résistent à la flamme. Un inconvénient de la réalisation proposée réside dans la complexité du procédé d'obtention mis en oeuvre, qui nécessite de nombreuses étapes.

Il est connu de la demande FR 11 60130 de réaliser un récipient de cuisson comportant une face extérieure anodisée dure et colorée, avec une étape de coloration mettant en oeuvre au moins un pigment minéral hydrosoluble. Une telle réalisation permet d'obtenir des récipients de cuisson pour lesquels les colorations de la face extérieure présentent un caractère durable, sont susceptibles de résister aux agents lessiviels utilisés dans les lave-vaisselle et résistent à la flamme, sans nécessiter de revêtement sol gel sur la face extérieure anodisée dure. Un inconvénient de la réalisation proposée réside dans la gamme limitée de colorations possibles, qui vont du jaune pale au marron, en jouant sur la concentration des bains de coloration, la température et le temps d'immersion.

Il est connu de la demande FR 12 52086 de réaliser un récipient de cuisson comportant une face extérieure anodisée dure et colorée, avec une étape de coloration mettant en oeuvre au moins un colorant organique anthraquinonique hydrosoluble. Une telle réalisation permet d'obtenir des récipients de cuisson pour lesquels les colorations de la face extérieure présentent un caractère durable et résistent à la flamme. Les colorations ainsi obtenues s'étendent parmi la gamme des bleus. Toutefois, la tenue de ces colorations aux agents lessiviels utilisés dans les lave-vaisselle est limitée.

Le document WO 2008/061555 divulgue un procédé selon les caractéristiques du préambule de la revendication 1.

Un but de la présente invention est de proposer un large choix de colorations de la surface extérieure anodisée d'un récipient de cuisson, qui présentent un caractère durable, sans forcément nécessiter un revêtement de protection.

Un autre but de la présente invention est de proposer un large choix de colorations de la surface extérieure anodisée d'un récipient de cuisson, qui soient susceptibles de résister à la flamme ou toute autre source de chaleur utilisée pour réaliser les cuissons, sans forcément nécessiter un revêtement de protection.

Un autre but de la présente invention est de proposer un large choix de colorations de la surface extérieure anodisée d'un récipient de cuisson, qui soient susceptibles de résister aux agents lessiviels utilisés dans les lave-vaisselle, sans forcément nécessiter un revêtement de protection.

Un but additionnel de la présente invention est de proposer un large choix de colorations de la surface extérieure anodisée d'un récipient de cuisson, qui soient compatibles avec un revêtement PTFE de la surface intérieure dudit récipient de cuisson, sans forcément nécessiter un revêtement de protection.

Ces buts sont atteints avec un procédé d'obtention d'un récipient de cuisson comportant les étapes suivantes :
- réalisation d'une cuve présentant une face extérieure en aluminium et une face intérieure,
- réalisation d'une anodisation d'au moins la face extérieure de la cuve pour obtenir une couche anodique présentant des pores,
- au moins une étape de coloration étant réalisée sur la face extérieure anodisée après l'anodisation, la ou au moins l'une des étapes de coloration mettant en oeuvre au moins un sel métallique déposé au fond des pores de la couche anodique par technique électrochimique,
du fait qu'une étape de traitement électrochimique préliminaire est réalisée sur la face extérieure anodisée après l'anodisation, ladite étape de traitement électrochimique préliminaire utilisant alternativement un courant continu et un courant alternatif pour modifier la forme des pores de la couche anodique, ladite étape de traitement électrochimique préliminaire étant suivie par la ou au moins l'une des étapes de coloration utilisant un courant alternatif pour déposer le ou les sels métalliques au fond des pores de la couche anodique.

Une telle coloration est une électrocoloration interférentielle permettant d'obtenir davantage de couleurs, du fait que les pores de forme modifiée absorbent certaines longueurs d'onde et réfléchissent d'autres longueurs d'ondes, qui sont perçues par l'oeil

En d'autres termes, la ou au moins l'une des étapes de coloration utilise un courant électrique pour réaliser la déposition du ou des sels métalliques dans les pores de la couche anodique.

Ces dispositions permettent d'obtenir une gamme plus étendue de colorations de la surface extérieure anodisée d'un récipient de cuisson, sans forcément nécessiter un revêtement de protection, qui soient susceptibles de résister à la flamme ou toute autre source de chaleur utilisée pour réaliser les cuissons, qui soient susceptibles de résister aux agents lessiviels utilisés dans les lave-vaisselle, et qui permettent la réalisation d'un revêtement PTFE de la surface intérieure dudit récipient de cuisson.

Si désiré, au moins un traitement de colmatage peut être réalisé sur la face extérieure anodisée colorée après la coloration électrochimique et/ou un revêtement additionnel de protection peut être appliqué au moins sur la face extérieure anodisée colorée.

Avantageusement, le ou l'un au moins des sels métalliques est choisi parmi les sels d'étain, de cuivre, de nickel, de cobalt, de sélénium, de manganèse, de zinc, d'argent, d'or, de chrome, de baryum ou de molybdène.

Selon une forme de réalisation préférée, ledit procédé comporte une étape de réalisation d'un revêtement PTFE sur la face intérieure de la cuve. Si désiré l'étape de réalisation d'un revêtement PTFE peut comporter une préparation de surface ainsi que le dépôt d'une ou plusieurs couches intermédiaires. Le revêtement PTFE peut notamment être réalisé par enduction.

Alors, selon un mode de réalisation, le procédé comporte une étape de réalisation d'un revêtement PTFE sur la face intérieure de la cuve et l'étape de réalisation d'une anodisation de la face extérieure de la cuve intervient après l'étape de réalisation d'un revêtement PTFE sur la face intérieure de la cuve. L'anodisation effectuée après le revêtement PTFE présente l'avantage de n'anodiser que la face extérieure de la cuve, ce qui permet de réduire le temps de traitement, de diminuer la consommation de courant et d'acide par rapport à l'anodisation de la face extérieure et de la face intérieure de la cuve. De plus le PTFE supporte bien le bain d'acide sulfurique usuellement utilisé pour réaliser l'anodisation.

Si désiré, le procédé comporte une étape de réalisation d'une anodisation dure préliminaire de la face extérieure et de la face intérieure de la cuve avant l'étape de réalisation d'un revêtement PTFE sur la face intérieure de la cuve, l'étape de réalisation d'une anodisation de la face extérieure de la cuve intervenant après une étape de décapage de la face extérieure de la cuve postérieure à l'étape de réalisation d'un revêtement PTFE sur la face intérieure de la cuve. Ce traitement d'anodisation dure préliminaire concerne la face intérieure et la face extérieure de la cuve et permet d'obtenir une base dure avant la réalisation de revêtement PTFE.

Selon un autre mode de réalisation, l'étape d'anodisation et l'étape de coloration sont réalisées sur la face intérieure et la face extérieure de la cuve. Ce traitement d'anodisation concerne la face intérieure et la face extérieure de la cuve. Si désiré, le traitement d'anodisation peut être un traitement d'anodisation dure permettant d'obtenir une base dure.

Avantageusement, le procédé comporte une étape de réalisation d'un revêtement PTFE sur la face intérieure de la cuve après l'étape de coloration. L'étape de réalisation d'un revêtement PTFE peut être envisagée après l'étape de coloration, du fait que les pigments envisagés résistent aux températures utilisées lors de la cuisson du revêtement PTFE.

Selon une caractéristique avantageuse de l'invention, l'anodisation est réalisée à une température supérieure ou égale à 0°C. Pour des températures d'anodisation inférieures, les pores formés lors de l'anodisation sont en effet très denses et très petits et la coloration de la surface anodisée ne se fait pas.

Selon une autre caractéristique avantageuse de l'invention, l'anodisation est réalisée à une température inférieure ou égale à 17°C. Pour des températures d'anodisation supérieures, les pores formés lors de l'anodisation sont trop gros et l'anodisation n'est pas suffisamment dure, même si la coloration se fait bien.

Selon une caractéristique préférée de l'invention, l'anodisation est réalisée à une température comprise entre 5°C et 12°C. Pour cette gamme de températures, les pores formés lors de l'anodisation sont suffisamment petits pour que la surface anodisée soit suffisamment dure, et suffisamment gros pour une bonne déposition du ou des sel(s) métalliques utilisé(s) pour la coloration dans les pores de la couche anodique.

Ces buts sont atteints aussi avec un récipient de cuisson comportant une cuve présentant une face extérieure en aluminium et une face intérieure, la face extérieure étant anodisée et colorée, ledit récipient de cuisson étant obtenu selon un procédé conforme à l'une au moins des caractéristiques précitées.

Selon un mode de réalisation avantageux, la cuve est obtenue par emboutissage d'un substrat présentant au moins une face en aluminium, ladite face formant alors la face extérieure de la cuve.

Alors, selon une forme de réalisation, le substrat présente deux faces en aluminium. Le substrat peut notamment être en aluminium massif, ou en colaminé présentant deux faces en aluminium et une âme en acier. Si désiré l'acier peut être choisi parmi les aciers inoxydables.

Alors, selon une autre forme de réalisation, le substrat est formé par un colaminé présentant une face en aluminium et une face en acier inoxydable, cette face en acier inoxydable étant avantageusement destinée à être revêtue de PTFE.

Selon un autre mode de réalisation avantageux, la cuve est réalisée en fonte d'aluminium.

Selon une forme de réalisation avantageuse, la face extérieure de la cuve présente une surface brossée ou microbillée. Le traitement d'anodisation est un traitement de surface, dans lequel la matière de la surface est modifiée, et non un revêtement de surface, dans lequel une ou plusieurs couches sont ajoutées sur une surface existante. Le traitement d'anodisation n'est pas limité aux états de surfaces lisses ou polis, une anodisation peut notamment être envisagée sur une surface brossée ou microbillée.

Avantageusement, pour obtenir un récipient de cuisson compatible induction, la cuve comporte au moins un insert réalisé en matériau ferromagnétique.

Ces buts sont atteints aussi avec un article culinaire comportant un récipient de cuisson et un organe de préhension fixé sur ledit récipient de cuisson par au moins un rivet ou par soudage, ledit récipient de cuisson étant conforme à l'une au moins des caractéristiques précitées.

Ces buts sont atteints aussi avec un appareil électrique de cuisson, comportant un récipient de cuisson associé à des moyens de chauffe, ledit récipient de cuisson étant conforme à l'une au moins des caractéristiques précitées.

L'invention sera mieux comprise à l'étude d'exemples de réalisation, pris à titre nullement limitatif, illustrés dans les figures annexées, dans lesquelles :
- la figure 1 illustre un récipient de cuisson 1 selon l'invention,
- la figure 2 illustre un article culinaire 100 comportant un récipient de cuisson 1 selon l'invention,
- la figure 3 illustre de manière schématique un appareil électrique de cuisson 200 comportant un récipient de cuisson 1 selon l'invention.

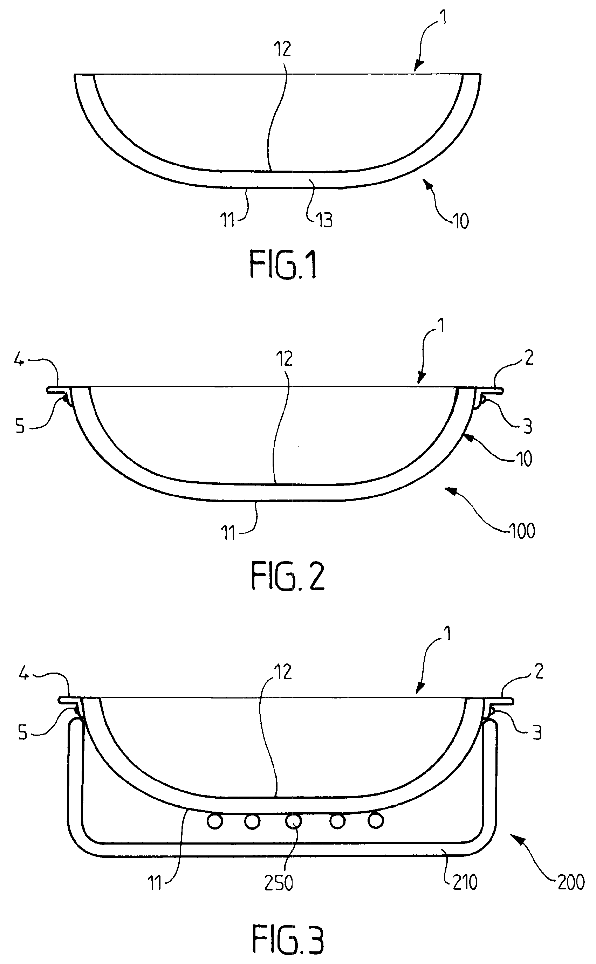

Le récipient de cuisson 1 illustré sur les figures 1 et 2 comporte une cuve 10 présentant une face extérieure 11 en aluminium ainsi qu'une face intérieure 12.

Selon un mode de réalisation, la cuve 10 est obtenue par emboutissage d'un substrat 13 présentant au moins une face en aluminium destinée à former la face extérieure 11 de la cuve 10.

Selon une forme de réalisation, le substrat 13 présente deux faces en aluminium destinées à former respectivement la face extérieure 11 et la face intérieure 12 de la cuve 10.

Si désiré, le substrat 13 peut être en aluminium massif. Un alliage d'aluminium 3003 peut notamment être utilisé à cet effet. Le substrat 13 utilisé pour former la cuve 10 est alors découpé dans une tôle d'aluminium.

Selon une autre forme de réalisation, le substrat 13 est formé par un colaminé présentant une face en aluminium et une face en acier inoxydable, la face en aluminium étant destinée à former la face extérieure 11 de la cuve, la face en acier inoxydable étant destinée à former la face intérieure 12 de la cuve 10.

Selon autre un mode de réalisation, la cuve 10 est réalisée en fonte d'aluminium, par exemple avec un alliage d'aluminium AlSi12.

Si désiré, la face extérieure 11 de la cuve 10 n'est pas nécessairement lisse ou polie, mais peut notamment présenter une surface brossée ou microbillée.

Si désiré la cuve 10 peut comporter au moins un insert réalisé en matériau ferromagnétique, tel que par exemple un acier ferritique, pour réaliser un récipient de cuisson 1 susceptible d'être chauffé par induction. De préférence le matériau ferromagnétique est un acier inoxydable ferritique. Si désiré l'insert réalisé en matériau ferromagnétique peut être formé par une plaque comportant une ou plusieurs perforations. L'insert est avantageusement assemblé par frappe à chaud ou à froid avec l'aluminium du substrat 13 ou est recouvert d'aluminium moulé, la ou les perforations étant de préférence remplies par l'aluminium. L'insert réalisé en matériau ferromagnétique peut présenter au moins une partie apparente, qu'il convient de protéger par un masquage dans les bains chimiques acides, tels que notamment le ou les bains d'anodisation.

Le récipient de cuisson 1 selon l'invention est obtenu selon un procédé comportant les étapes suivantes :
- réalisation d'une cuve 10 présentant une face extérieure 11 en aluminium et une face intérieure 12,
- réalisation d'une anodisation d'au moins la face extérieure 11 de la cuve 10 pour obtenir une couche anodique présentant des pores,
dans lequel au moins une étape de coloration est réalisée sur la face extérieure anodisée après l'anodisation, la ou au moins l'une des étapes de coloration mettant en oeuvre au moins un sel métallique déposé au fond des pores de la couche anodique par technique électrochimique.

Le procédé mis en oeuvre peut notamment comporter une étape de dégraissage, au moins une étape de décapage, une étape de brillantage, une étape d'anodisation dans une solution d'acide sulfurique, chacune de ces étapes étant suivie d'un rinçage.

Avant coloration, les surfaces à colorer sont soumises à une attaque dans un produit alcalin suivie de rinçages et d'une neutralisation en milieu acide. Si désiré, une préparation mécanique préalable peut être réalisée selon l'aspect de surface recherché, par exemple une préparation mécanique par polissage, brossage, sablage ou grenaillage. Après la neutralisation un brillantage peut être réalisé par immersion dans un bain d'acide phosphorique.

L'étape d'anodisation dans une solution d'acide sulfurique est réalisée avec une concentration en acide comprise entre 10 et 500 g/l, à une température comprise entre -10°C à +30°C, avec un courant continu présentant une densité de courant comprise entre 0,1 à 5 A/dm². Une étape d'anodisation en courant continu de 2 A/dm³ dans une solution d'acide sulfurique de 180 à 190 g/l à une température de 10 à 15°C pendant 45 à 50 min, permet d'obtenir une vitesse de déposition de 1 µm/min. Une température peu élevée de l'ordre de 5°C permet d'obtenir une couche anodique plus dure, présentant des pores plus petits. Toutefois la coloration est plus difficile à obtenir lorsque la taille des pores est peu importante. Une taille de pores supérieure à 5 nm est préférée, la taille des pores étant avantageusement comprise entre 5 et 150 nm et de préférence comprise entre 5 et 50 nm. La température de traitement préférée est supérieure à 5°C et inférieure à 20°C. Des essais ont montré que pour obtenir une anodisation suffisamment dure, la température du bain d'anodisation doit être inférieure ou égale à 17°C, et de préférence inférieure ou égale à 12°C; pour obtenir une coloration de la surface anodisée, la température du bain d'anodisation doit être supérieure ou égale à 0°C, et de préférence supérieure ou égale à 5°C.

L'opération d'anodisation est suivie de plusieurs rinçages dont le dernier est réalisé avec de l'eau déminéralisée. Cette gamme de traitement conduit à la formation d'une couche anodisée d'une épaisseur variable suivant le temps de traitement de 5 à 100 µm et d'une dureté allant de 100 à 600 Vickers.

Certaines couleurs peuvent être obtenues en déposant des sels métalliques au fond des pores de la couche anodique. De manière générale, plus le dépôt de sels est épais, plus la couleur obtenue est foncée.

Pour d'autres couleurs, il est nécessaire de modifier la géométrie des pores avant le dépôt de sels métalliques. Cette modification est également effectuée par technique électrochimique.

Selon une première forme de réalisation permettant notamment d'obtenir des couleurs champagne, bronze, marron, noir, la ou au moins l'une des étapes de coloration utilise un courant alternatif pour déposer le ou les sels métalliques au fond des pores de la couche anodique. Le sel métallique utilisé est par exemple un sel d'étain, notamment un sulfate d'étain. Le courant alternatif permet de faire pénétrer le sel métallique à l'intérieur des pores de la couche anodique, le traitement utilisé est un traitement électrochimique. L'épaisseur de sel métallique déposé à l'intérieur des pores de la couche anodisée dépend du temps de traitement et détermine la couleur obtenue.

Selon une deuxième forme de réalisation permettant d'obtenir une gamme plus étendue de couleurs, notamment des couleurs gris, graphite, vert, anthracite, bordeaux, voire bleu, une étape de traitement électrochimique préliminaire est réalisée sur la face extérieure anodisée après l'anodisation, ladite étape de traitement préliminaire utilisant alternativement un courant continu et un courant alternatif pour modifier la forme des pores de la couche anodique, l'étape de traitement électrochimique préliminaire étant suivie par la ou au moins l'une des étapes de coloration utilisant un courant alternatif pour déposer le ou les sels métalliques au fond des pores de la couche anodique.

Le procédé mis en oeuvre peut notamment comporter une étape de modification des pores dans une solution d'acide sulfurique de 40 g/l à une température de 20°C utilisant successivement courant continu, courant alternatif, courant continu.

Avantageusement, le ou l'un au moins des sels métalliques est choisi parmi les sels d'étain, de cuivre, de nickel, de cobalt, de sélénium, de manganèse, de zinc, d'argent, d'or, de chrome, de baryum ou de molybdène.

De manière surprenante, les essais sur l'ensemble des couleurs testées ont montré qu'il n'y avait aucune altération des couleurs des faces extérieures anodisées ainsi colorées.

De préférence, l'étape de coloration est suivie d'une étape de rinçage. L'étape de rinçage peut être suivie d'une étape de colmatage. L'étape de colmatage peut par exemple utiliser l'eau bouillante, ou encore de la vapeur saturée, ou encore un bain contenant des sels métalliques de nickel et/ou de lithium et/ou de silicium. Un double colmatage utilisant sels métalliques et eau chaude peut être envisagé. Toutefois la présence d'une étape de colmatage ne semble pas modifier de manière notoire la durabilité des colorations obtenues.

De manière surprenante, les essais sur l'ensemble des couleurs testées ont montré qu'il n'y avait aucune altération des couleurs des faces extérieures anodisées ainsi colorées.

Le procédé comporte avantagement une étape de réalisation d'un revêtement PTFE sur la face intérieure de la cuve. L'étape de réalisation du revêtement PTFE peut notamment être réalisée par enduction. Si désiré, l'étape de réalisation du revêtement PTFE peut utiliser un PTFE chargé, pour améliorer la résistance de la surface de la face intérieure 12 de la cuve 10 revêtue de PTFE. Des particules minérales peuvent notamment être utilisées comme charge de renfort. Pour obtenir la surface de cuisson en PTFE, le revêtement PTFE est chauffé à une température dépassant 400°C (usuellement de l'ordre de 420°C).

Selon un mode de réalisation, l'étape de réalisation d'une anodisation de la face extérieure 11 de la cuve 10 intervient avant l'étape de réalisation du revêtement PTFE sur la face intérieure 12 de la cuve 10. Si désiré, le traitement d'anodisation peut être un traitement d'anodisation dure. L'obtention d'un revêtement PTFE après anodisation dure est notamment divulguée dans le document EP 0 902 105. Cette disposition permet d'obtenir une base dure améliorant la résistance mécanique du revêtement PTFE.

Selon un autre mode de réalisation, l'étape de réalisation d'une anodisation de la face extérieure 11 de la cuve 10 intervient après l'étape de réalisation du revêtement PTFE sur la face intérieure 12 de la cuve 10. Si désiré, le traitement d'anodisation peut être un traitement d'anodisation dure.

Si désiré, une étape de réalisation d'une anodisation dure préliminaire de la face extérieure 11 et de la face intérieure 12 de la cuve 10 peut être envisagée avant l'étape de réalisation d'un revêtement PTFE sur la face intérieure 12 de la cuve 10. Ce traitement préalable d'anodisation dure permet d'obtenir une base dure sous le revêtement PTFE. Toutefois un décapage de la face extérieure 11 de la cuve 10 est alors nécessaire pour réanodiser ladite face extérieure 11 avant de procéder à une étape de coloration. L'étape de réalisation d'une anodisation de la face extérieure 11 de la cuve 10 intervient alors après une étape de décapage de la face extérieure 11 de la cuve 10 postérieure à l'étape de réalisation d'un revêtement PTFE sur la face intérieure 12 de la cuve 10.

L'étape d'anodisation peut être réalisée sur la face intérieure 12 et la face extérieure 11 de la cuve 10. L'étape d'anodisation est alors une étape d'anodisation bi-face. Si désiré, le traitement d'anodisation peut être un traitement d'anodisation dure bi-face, pour obtenir une base dure.

Si désiré, l'étape de coloration peut être réalisée sur la face intérieure 12 et la face extérieure 11 de la cuve 10, après l'étape d'anodisation. Une étape de réalisation d'un revêtement PTFE sur la face intérieure 12 de la cuve 10 peut alors être envisagée après l'étape de coloration.

En alternative, une étape de réalisation d'un revêtement PTFE sur la face intérieure 12 de la cuve 10 peut être envisagée après l'étape d'anodisation biface. Une autre étape d'anodisation est alors réalisée sur la face extérieure 11 de la cuve 10 après l'étape de réalisation d'un revêtement PTFE sur la face intérieure 12 de la cuve 10. L'étape de coloration sur la face extérieure 11 de la cuve 10 anodisée intervient après l'autre étape d'anodisation.

Si désiré, une préparation de surface avant l'anodisation peut comporter un dégraissage de type acide ou basique et/ou un décapage de type acide ou basique, et/ou une neutralisation à l'HNO₃. Un dégraissage de quelques minutes dans un bain de NaOH de concentration 50g/l à une température de l'ordre de 50°C donne des résultats satisfaisants.

Le traitement d'anodisation peut notamment être réalisé par trempage dans un bain. Le traitement d'anodisation préliminaire peut aussi être réalisé par trempage dans un bain. L'anodisation dure présente l'avantage d'une bonne résistance aux rayures et aux chocs. Une gamme de matériaux plus étendue peut ainsi être envisagée pour la réalisation de la cuve 10, par rapport à un émaillage, tout en conservant les propriétés de nettoyage conférées par le revêtement PTFE de la face intérieure 12 de la cuve 10.

Une couche anodisée présentant une épaisseur comprise entre 10 µm et 100 µm donne des résultats satisfaisants pour les possibilités de coloration.

De préférence, pour obtenir une couche anodisée dure présentant une tenue mécanique suffisante, la couche anodisée présente une épaisseur au moins égale à 25 µm. La dureté de la couche anodisée dure ainsi obtenue est supérieure à 350 Hv.

Selon une caractéristique préférée, la face extérieure 11 anodisée comporte des pores de taille inférieure à 30nm et de préférence inférieure à 20nm.

Le procédé selon l'invention peut notamment comporter les exemples de réalisation suivants :
Exemple 1 : enduction PTFE de la face intérieure 12, anodisation de la face extérieure 11, coloration de la face extérieure 11 anodisée.
Exemple 2 : enduction PTFE de la face intérieure 12, anodisation dure de la face extérieure 11, coloration de la face extérieure 11 anodisée dure.
Exemple 3 : anodisation dure préliminaire bi-face de la cuve 10 pour obtenir une base dure, enduction PTFE de la face intérieure 12, anodisation de la face extérieure 11, coloration de la face extérieure 11 anodisée dure.
Exemple 4 : anodisation dure préliminaire bi-face de la cuve 10 pour obtenir une base dure, enduction PTFE de la face intérieure 12, anodisation dure de la face extérieure 11, coloration de la face extérieure 11 anodisée dure.
Exemple 5 : anodisation dure bi-face de la cuve 10 pour obtenir une base dure, coloration de la face extérieure 11 et de la face intérieure 12 anodisées dures, enduction PTFE de la face intérieure 12.
Exemple 6 : anodisation dure bi-face de la cuve 10 pour obtenir une base dure, coloration de la face extérieure 11 et de la face intérieure 12 anodisées dures, enduction PTFE de la face intérieure 12, anodisation de la face extérieure 11, coloration de la face extérieure 11 anodisée.
Exemple 7 : anodisation dure bi-face de la cuve 10 pour obtenir une base dure, coloration de la face extérieure 11 et de la face intérieure 12 anodisées dures, enduction PTFE de la face intérieure 12, anodisation dure de la face extérieure 11, coloration de la face extérieure 11 anodisée dure.
Exemple 8 : anodisation bi-face de la cuve 10, coloration de la face extérieure 11 et de la face intérieure 12 anodisées.
Exemple 9 : anodisation dure bi-face de la cuve 10 pour obtenir une base dure, coloration de la face extérieure 11 et de la face intérieure 12 anodisées dures.

La figure 2 illustre un article culinaire 100 comportant un récipient de cuisson 1 et un organe de préhension 2 fixé sur ledit récipient de cuisson 1 par au moins un rivet 3. A cet effet le rivet 3 est monté dans un trou ménagé dans la cuve 10 du récipient de cuisson 1. Si désiré plusieurs rivets 3 peuvent être utilisés pour fixer l'organe de préhension 2 sur le récipient de cuisson 1. De préférence entre deux et quatre rivets 3 sont utilisés pour fixer l'organe de préhension 2 sur le récipient de cuisson 1. En alternative l'organe de préhension 2 pourrait être fixé sur ledit récipient de cuisson 1 par soudage. Si désiré un autre organe de préhension 4 peut être fixé sur ledit récipient de cuisson 1 par au moins un autre rivet 5 ou par soudage.

La figure 3 illustre un appareil électrique de cuisson 200, comportant un récipient de cuisson 1 associé à des moyens de chauffe 250. Le récipient de cuisson 1 forme une cuve agencée dans une base chauffante 210 comportant les moyens de chauffe 250. La face extérieure 11 de la cuve 10 repose sur les moyens de chauffe 250. Si désiré la face extérieure 11 peut être solidaire des moyens de chauffe 250.

A titre de variante, la face intérieure 12 de la cuve 10 n'est pas nécessairement revêtue de PTFE, d'autres types de revêtements peuvent être envisagés si désiré.

A titre de variante, la face intérieure 12 de la cuve 10 n'est pas nécessairement revêtue. Si désiré la face intérieure 12 de la cuve 10 peut notamment être polie.

La présente invention n'est nullement limitée aux exemples de réalisation décrits, mais englobe de nombreuses modifications dans le cadre des revendications.

## Revendications

1. Procédé d'obtention d'un récipient de cuisson (1), comportant les étapes suivantes :
- réalisation d'une cuve (10) présentant une face extérieure (11) en aluminium et une face intérieure (12),
- réalisation d'une anodisation d'au moins la face extérieure (11) de la cuve (10) pour obtenir une couche anodique présentant des pores,
- au moins une étape de coloration est réalisée sur la face extérieure anodisée après l'anodisation, la ou au moins l'une des étapes de coloration mettant en oeuvre au moins un sel métallique déposé au fond des pores de la couche anodique par technique électrochimique,
**caractérisé en ce qu'**une étape de traitement électrochimique préliminaire est réalisée sur la face extérieure anodisée après l'anodisation, ladite étape de traitement électrochimique préliminaire utilisant alternativement un courant continu et un courant alternatif pour modifier la forme des pores de la couche anodique, et **en ce que** ladite étape de traitement électrochimique préliminaire est suivie par la ou au moins l'une des étapes de coloration utilisant un courant alternatif pour déposer le ou les sels métalliques au fond des pores de la couche anodique.

2. Procédé d'obtention d'un récipient de cuisson (1) selon la revendication 1, **caractérisé en ce que** le ou l'un au moins des sels métalliques est choisi parmi les sels d'étain, de cuivre, de nickel, de cobalt, de sélénium, de manganèse, de zinc, d'argent, d'or, de chrome, de baryum ou de molybdène.

3. Procédé d'obtention d'un récipient de cuisson (1) selon l'une des revendications 1 ou 2, **caractérisé en ce qu'**il comporte une étape de réalisation d'un revêtement PTFE sur la face intérieure (12) de la cuve (10) et **en ce que** l'étape de réalisation d'une anodisation de la face extérieure (11) de la cuve (10) intervient après l'étape de réalisation d'un revêtement PTFE sur la face intérieure (12) de la cuve (10).

4. Procédé d'obtention d'un récipient de cuisson (1) selon la revendication 3, **caractérisé en ce qu'**il comporte une étape de réalisation d'une anodisation dure préliminaire de la face extérieure (11) et de la face intérieure (12) de la cuve (10) avant l'étape de réalisation d'un revêtement PTFE sur la face intérieure (12) de la cuve (10) et **en ce que** l'étape de réalisation d'une anodisation de la face extérieure (11) de la cuve (10) intervient après une étape de décapage de la face extérieure (11) de la cuve (10) postérieure à l'étape de réalisation d'un revêtement PTFE sur la face intérieure (12) de la cuve (10).

5. Procédé d'obtention d'un récipient de cuisson (1) selon l'une des revendications 1 ou 2, **caractérisé en ce que** l'étape d'anodisation et l'étape de coloration sont réalisées sur la face intérieure (12) et la face extérieure (11) de la cuve (10).

6. Procédé d'obtention d'un récipient de cuisson (1) selon la revendication 5, **caractérisé en ce qu'**il comporte une étape de réalisation d'un revêtement PTFE sur la face intérieure (12) de la cuve (10) après l'étape de coloration.

7. Procédé d'obtention d'un récipient de cuisson (1) selon l'une des revendications 1 à 6, **caractérisé en ce que** l'anodisation est réalisée à une température supérieure ou égale à 0°C.

8. Procédé d'obtention d'un récipient de cuisson (1) selon la revendication 7, **caractérisé en ce que** l'anodisation est réalisée à une température inférieure ou égale à 17°C.

9. Procédé d'obtention d'un récipient de cuisson (1) selon l'une des revendications 1 à 8, **caractérisé en ce que** l'anodisation est réalisée à une température comprise entre 5°C et 12°C.

10. Récipient de cuisson (1) comportant une cuve (10) présentant une face extérieure (11) en aluminium et une face intérieure (12), la face extérieure (11) étant anodisée et colorée, **caractérisé en ce qu'**il est obtenu selon un procédé conforme à l'une des revendications 1 à 9.

11. Récipient de cuisson (1) selon la revendication 10, **caractérisé en ce que** la cuve (10) est obtenue par emboutissage d'un substrat (13) présentant au moins une face en aluminium.

12. Récipient de cuisson (1) selon la revendication 11, **caractérisé en ce que** le substrat (13) présente deux faces en aluminium.

13. Récipient de cuisson (1) selon l'une des revendications 11 ou 12, **caractérisé en ce que** le substrat (13) est en aluminium massif.

14. Récipient de cuisson (1) selon la revendication 11, **caractérisé en ce que** le substrat (13) est formé par un colaminé présentant une face en aluminium et une face en acier inoxydable.

15. Récipient de cuisson (1) selon l'une des revendications 10 à 13, **caractérisé en ce que** la cuve (10) est réalisée en fonte d'aluminium.

16. Récipient de cuisson (1) selon l'une des revendications 10 à 15, **caractérisé en ce que** la face extérieure (11) de la cuve (10) présente une surface brossée ou microbillée.

17. Récipient de cuisson (1) selon l'une des revendications 10 à 16, **caractérisé en ce que** la cuve (10) comporte au moins un insert réalisé en matériau ferromagnétique.

18. Article culinaire (100) comportant un récipient de cuisson (1) et un organe de préhension (2) fixé sur ledit récipient de cuisson (1) par au moins un rivet (3) ou par soudage, **caractérisé en ce que** ledit récipient de cuisson (1) est conforme à l'une des revendications 10 à 17.

19. Appareil électrique de cuisson (200), comportant un récipient de cuisson (1) associé à des moyens de chauffe (250), **caractérisé en ce que** ledit récipient de cuisson (1) est conforme à l'une des revendications 10 à 17.

## Patentansprüche

1. Verfahren zur Herstellung eines Kochbehälters (1), das die folgenden Schritte umfasst:
- Herstellen eines Behälters (10), der eine Außenseite (11) aus Aluminium und eine Innenseite (12) aufweist,
- Eloxieren zumindest der Außenseite (11) des Behälters (10), um eine eloxierte Schicht zu erzielen, die Poren aufweist,
- zumindest einen Schritt des Färbens, der nach dem Eloxieren auf der eloxierten Außenseite durchgeführt wird, wobei der oder zumindest einer der Schritte des Färbens zumindest ein Metallsalz einsetzt, das sich durch einen elektrochemischen Prozess auf dem Grund der Poren der eloxierten Schicht absetzt, **dadurch gekennzeichnet, dass** nach dem Eloxieren ein vorbereitender Schritt der elektrochemischen Behandlung auf der eloxierten Außenseite durchgeführt wird, wobei der genannte vorbereitende Schritt der elektrochemischen Behandlung abwechselnd einen Gleichstrom und einen Wechselstrom verwendet, um die Form der Poren der eloxierten Schicht zu verändern, und dass auf den genannten vorbereitenden Schritt der elektrochemischen Behandlung der oder zumindest einer der Schritte des Färbens folgt, bei dem ein Wechselstrom verwendet wird, um das oder die Metallsalze am Grund der Poren der eloxierten Schicht abzusetzen.

2. Verfahren zur Herstellung eines Kochbehälters (1) nach Anspruch 1, **dadurch gekennzeichnet, dass** das oder zumindest eines der Metallsalze aus folgenden Salzen ausgewählt wird: Zinn-, Kupfer-, Nickel-, Kobalt-, Selen-, Mangan-, Zink-, Silber-, Gold-, Chrom-, Barium- oder Molybdänsalz.

3. Verfahren zur Herstellung eines Kochbehälters (1) nach einem der Ansprüche 1 oder 2, **dadurch gekennzeichnet, dass** es einen Schritt des Aufbringens einer PTFE-Beschichtung auf die Innenseite (12) des Behälters (10) umfasst und dass der Schritt des Eloxierens der Außenseite (11) des Behälters (10) nach dem Schritt des Aufbringens einer PTFE-Beschichtung auf die Innenseite (12) des Behälters (10) erfolgt.

4. Verfahren zur Herstellung eines Kochbehälters (1) nach Anspruch 3, **dadurch gekennzeichnet, dass** es einen Schritt des vorbereitenden Harteloxierens der Außenseite (11) und der Innenseite (12) des Behälters (10) vor dem Schritt des Aufbringens einer PTFE-Beschichtung auf die Innenseite (12) des Behälters (10) umfasst und dass der Schritt des Eloxierens der Außenseite (11) des Behälters (10) nach einem Schritt des Beizens der Außenseite (11) des Behälters (10) nach dem Schritt des Aufbringens einer PTFE-Beschichtung auf die Innenseite (12) des Behälters (10) erfolgt.

5. Verfahren zur Herstellung eines Kochbehälters (1) nach einem der Ansprüche 1 oder 2, **dadurch gekennzeichnet, dass** der Schritt des Eloxierens und der Schritt des Färbens auf der Innenseite (12) und der Außenseite (11) des Behälters (10) durchgeführt werden.

6. Verfahren zur Herstellung eines Kochbehälters (1) nach Anspruch 5, **dadurch gekennzeichnet, dass** es nach dem Schritt des Färbens einen Schritt des Aufbringens einer PTFE-Beschichtung auf die Innenseite (12) des Behälters (10) umfasst.

7. Verfahren zur Herstellung eines Kochbehälters (1) nach einem der Ansprüche 1 bis 6, **dadurch gekennzeichnet, dass** das Eloxieren bei einer Temperatur von mindestens 0 °C durchgeführt wird.

8. Verfahren zur Herstellung eines Kochbehälters (1) nach Anspruch 7, **dadurch gekennzeichnet, dass** das Eloxieren bei einer Temperatur von höchstens 17 °C durchgeführt wird.

9. Verfahren zur Herstellung eines Kochbehälters (1) nach einem der Ansprüche 1 bis 8, **dadurch gekennzeichnet, dass** das Eloxieren bei einer Temperatur zwischen 5 °C und 12 °C durchgeführt wird.

10. Kochbehälter (1) mit einem Behälter (10), der eine Außenseite (11) aus Aluminium und eine Innenseite (12) aufweist, wobei die Außenseite (11) eloxiert und gefärbt ist, **dadurch gekennzeichnet, dass** er mit einem Verfahren nach einem der Ansprüche 1 bis 9 hergestellt wird.

11. Kochbehälter (1) nach Anspruch 10, **dadurch gekennzeichnet, dass** der Behälter (10) durch Tiefziehen eines Substrats (13) erhalten wird, das zumindest eine Seite aus Aluminium aufweist.

12. Kochbehälter (1) nach Anspruch 11, **dadurch gekennzeichnet, dass** das Substrat (13) zwei Seiten aus Aluminium aufweist.

13. Kochbehälter (1) nach einem der Ansprüche 11 oder 12, **dadurch gekennzeichnet, dass** das Substrat (13) aus massivem Aluminium besteht.

14. Kochbehälter (1) nach Anspruch 11, **dadurch gekennzeichnet, dass** das Substrat (13) aus einem Verbundwerkstoff besteht, der eine Seite aus Aluminium und eine Seite aus Edelstahl aufweist.

15. Kochbehälter (1) nach einem der Ansprüche 10 bis 13, **dadurch gekennzeichnet, dass** der Behälter (10) aus Aluminiumguss hergestellt wird.

16. Kochbehälter (1) nach einem der Ansprüche 10 bis 15, **dadurch gekennzeichnet, dass** die Außenseite (11) des Behälters (10) eine gebürstete oder kugelgestrahlte Oberfläche aufweist.

17. Kochbehälter (1) nach einem der Ansprüche 10 bis 16, **dadurch gekennzeichnet, dass** der Behälter (10) zumindest einen Einsatz aus einem ferromagnetischen Werkstoff aufweist.

18. Kochgeschirr (100) mit einem Kochbehälter (1) und einem Griffelement (2), das an dem genannten Kochbehälter (1) durch mindestens einen Niet (3) oder durch Schweißen befestigt ist, **dadurch gekennzeichnet, dass** der genannte Kochbehälter (1) einem der Ansprüche 10 bis 17 entspricht.

19. Elektrisches Kochgerät (200) mit einem Kochbehälter (1) und Heizmitteln (250), **dadurch gekennzeichnet, dass** der genannte Kochbehälter (1) einem der Ansprüche 10 bis 17 entspricht.

## Claims

1. Process of obtaining a cooking vessel (1), comprising the following steps:
- Production of a container (10) with an exterior surface (11) made of aluminium and an interior surface (12),
- performance of anodisation on at least the exterior surface (11) of the container (10) to obtain an anodised layer with pores,
- at least one colouration step is performed on the anodised outer surface after the anodisation, where at least one of the colouration steps uses at least a metal salt deposited at the bottom of the anodised layer pores using an electrochemical technique, **characterised in that** a preliminary electrochemical treatment step is performed on the outer anodised surface after anodisation, said preliminary electrochemical treatment step alternatively using a direct current and an alternating current to change the shape of the pores in the anodised layer, and **in that** said preliminary electrochemical treatment step is followed by at least one of the colouration steps using an alternating current to deposit the metal salt(s) at the bottom of the anodised layer pores.

2. Process of obtaining a cooking vessel (1) according to claim 1, **characterised in that** the metal salt, or at least one of the metal salts, is selected from among tin, copper, nickel, cobalt, selenium, manganese, zinc, silver, gold, chromium, barium or molybdenum salts.

3. Process of obtaining a cooking vessel (1) according to one of claims 1 or 2, **characterised in that** it includes a step in which a PTFE coating is applied to the interior surface (12) of the container (10) and **in that** the step in which anodisation is performed on the exterior surface (11) of the container (10) occurs after the step in which a PTFE coating is applied to the interior surface (12) of the container (10).

4. Process of obtaining a cooking vessel (1) according to claim 3, **characterised in that** it includes a step in which preliminary hard anodisation is performed on the exterior surface (11) and on the interior surface (12) of the container (10) prior to the step in which a PTFE coating is applied to the interior surface (12) of the container (10) and **in that** the step in which anodisation is performed on the exterior surface (11) of the container (10) occurs after an scouring step on the exterior surface (11) of the container (10), following the PTFE-coating step on the interior surface (12) of the container (10).

5. Process of obtaining a cooking vessel (1) according to one of claims 1 or 2, **characterised in that** the anodisation step and the colouring step are performed on the interior surface (12) and the exterior surface (11) of the container (10).

6. Process of obtaining a cooking vessel (1) according to claim 5, **characterised in that** it includes a step in which a PTFE coating is applied to the interior surface (12) and the container (10) after the colouration step.

7. Process of obtaining a cooking vessel (1) according to any one of claims 1 to 6, **characterised in that** the anodisation is performed at a temperature greater than or equal to 0 °C.

8. Process of obtaining a cooking vessel (1) according to claim 7, **characterised in that** the anodisation is performed at a temperature less than or equal to 17 °C.

9. Process of obtaining a cooking vessel (1) according to any one of claims 1 to 8, **characterised in that** the anodisation is performed at a temperature between 5 °C and 12 °C.

10. Cooking vessel (1) comprising a container (10) with an outer surface (11) made of aluminium and an inner surface (12), the outer surface (11) being anodised and coloured, **characterised in that** it is obtained using a process defined in one of claims 1 to 9.

11. Cooking vessel (1) according to claim 10, **characterised in that** the container (10) is obtained by stamping a substrate (13) with at least one aluminium surface.

12. Cooking vessel (1) according to claim 11, **characterised in that** the substrate (13) has two aluminium surfaces.

13. Cooking vessel (1) according to one of claims 11 or 12, **characterised in that** the substrate (13) is made of solid aluminium.

14. Cooking vessel (1) according to claim 11, **characterised in that** the substrate (13) is formed by a laminate with one aluminium surface and one stainless steel surface.

15. Cooking vessel (1) according to any one of claims 10 to 13, **characterised in that** the container (10) is made of cast aluminium.

16. Cooking vessel (1) according to any one of claims 10 to 15, **characterised in that** the exterior surface (11) of the container (10) has a brushed or microbead-blasted surface.

17. Cooking vessel (1) according to any one of claims 10 to 16, **characterised in that** the container (10) has at least one insert made of ferromagnetic material.

18. Culinary item (100) consisting of a cooking vessel (1) and a handling instrument (2) attached to said cooking vessel (1) by at least one rivet (3) or by welding, **characterised in that** said cooking vessel (1) conforms to any one of claims 10 to 17.

19. Electrical cooking appliance (200), consisting of a cooking vessel (1) connected to heating means (250), **characterised in that** said cooking vessel (1) conforms to any one of claims 10 to 17.
